# EUROPEAN PATENT APPLICATION

(11) **EP 1 053 860 A1**
(43) Date of publication of application: **22.11.2000**
(21) Application number: 00102744.0
(22) Date of filing: 10.02.2000
(51) Int. Cl.: B29C 65/78, B26D 7/01, B60R 13/00

(54) **A method for preparing a coating layer, in particular for inner panels for vehicle doors**

(30) Priority: 21.05.1999 IT TO990430
(71) Applicant: CRS Srl Centro Ricerche e Sperimentazioni, 10060 Frossasco (IT)
(72) Inventor: Cesano, Franco, 10060 San Secondo di Pinerolo (IT)
(74) Representative: Marchitelli, Mauro

(57) **Abstract**

A method for preparing a coating formed by at least two sections (10) made of different materials or with different aesthetical characteristics, joined to each other along a predetermined line (40).

The method comprises the steps of:
- placing at least one first and second sheet (10) of coating layer between respective positioning devices (12) each of which includes two walls (14, 16) articulated to each other,
- placing in predetermined positions each of said positioning devices (12) on a cutting apparatus (26) and cutting each sheet (10) along a predetermined line,
- placing in predetermined positions at least two positioning devices (12) containing respective cut sheets (10) on a welding equipment (32), so that respective reciprocal joining lines of the sheets (10) overlay which each other and extend in correspondence with a welding element (36, 38), and
- welding the sheets (10) along said joining line (40) and removing the finished coating after having opened said positioning devices.

## Description

The present invention relates to a method for preparing a coating layer formed by at least two sections of different materials or with different aesthetical characteristics, joined to each other along a predetermined line.

The invention has been developed in particular for preparing coating layers for panels of thermoplastic material for vehicle doors. In this field, the coating of the panel is often formed by two or more sections with different material or with different aesthetical characteristics (for instance different colours) which must be positioned with precision on corresponding parts of the panel.

A particularly advantageous manufacturing method provides for applying the coating on the panel directly during the moulding phase thereof. This method provides for stretching the coating on a frame and placing the coating between two dies of a thermo-compression moulding equipment, together with at least one sheet of thermoplastic material heated at a plasticizing temperature. By closing the dies, both the moulding of the sheet and the application of the coating layer on a surface thereof are obtained in a single step. For operating in the manner previously disclosed, it is however necessary that the coating is formed either by a single layer or by two or more sections permanently joined to each other. In the latter case, it is necessary that the joining line between the different sections of the coating layer is precisely positioned with respect to the frame which holds the coating layer during the moulding step.

The object of the present invention is to provide a method which can be easily applied on industrial scale, which allows the different sections of a coating layer to be positioned with respect to each other with precision and great reproducibility.

In accordance with the present invention, this object is achieved by a method having the characteristics forming the subject of the main claim.

The present invention will now be disclosed in detail with reference to the attached drawings, given purely by way of non-limiting example, in which:
- figures 1 and 2 are schematic cross-sections showing two steps of the method according to the invention, and
- figure 3 is a schematic plan view taken along the arrow III of figure 2, at the end of the step of welding of the coating.

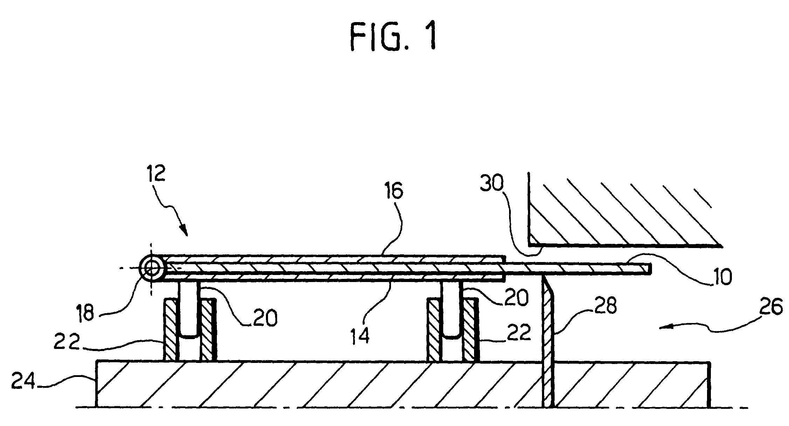

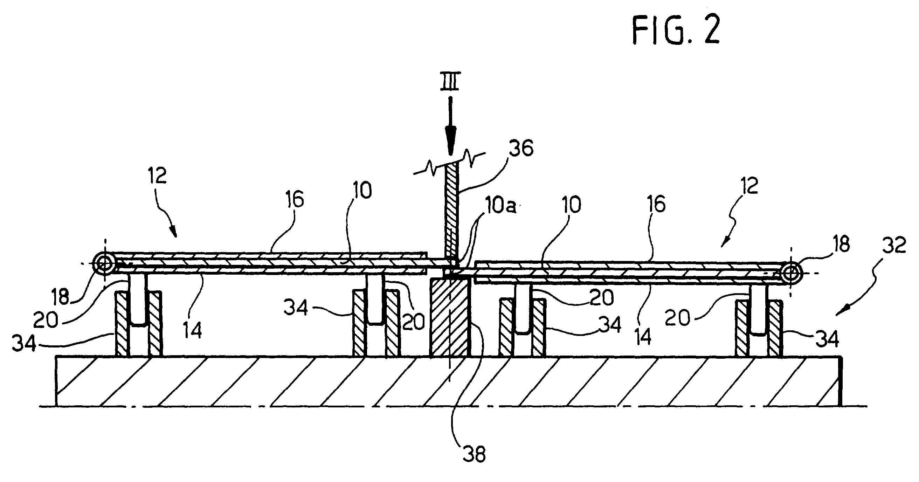

With reference to figure 1, a first step of the method according to the invention provides for cutting two or more sheets of flexible coating material so as to form different sections which have to be joined to each other for forming the finished coating layer. In accordance with the invention, a precise cut is carried out by placing each layer 10 in a respective positioning device 12 including two relatively rigid wall 14, 16 hinged to each other about an axis 18 parallel to the walls 14, 16. The positioning device 12 is provided with reference pins 20 which are intended to be inserted into respective seats 22 placed in a fixed position on a base 24 of a dinking die 26. The precise cut of the layer 10 is carried out by a blade 28 which acts against a counter plane 30. After having carried out the precise cut of the different sections forming the coating, the respective positioning devices 12 are placed on a welding apparatus indicated at 30 in figure 2. The welding equipment 32 is also provided with positioning seats 34 adapted to receiving the reference pins of two or more positioning devices 12. After the cutting operation, the layers 10 are not removed by the respective positioning devices, so that there is a guarantee that in the welding equipment 32 the different coating sections 10 are in predetermined and reproducible relative positions. The welding equipment 32 comprises, in a known way, a heating blade 36 which extends along the welding line. The heated blade 36 pushes overlying edges 10a of the coating sections 10 against a reference element 38. For welding the different sections, it is necessary that the sections to be joined to each other are made of compatible materials. If this is not the case, a film of material compatible with that of the other layer can be applied on the surface of one of the layers.

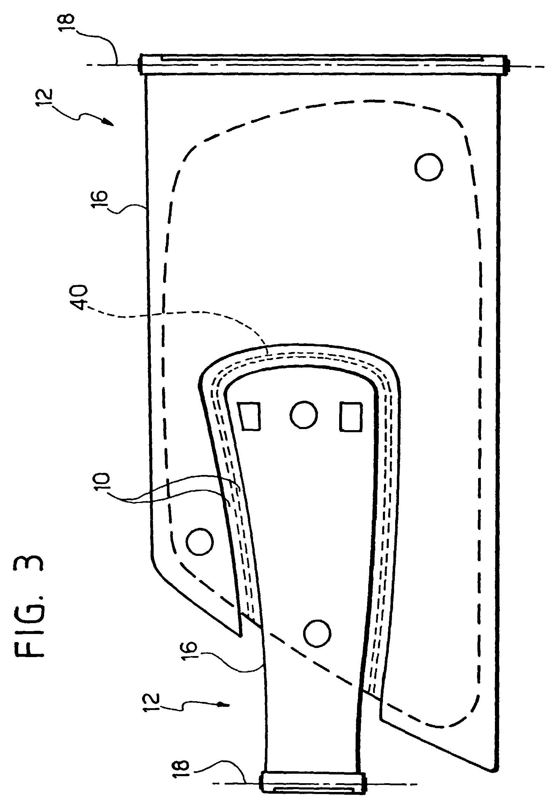

Figure 3 shows the equipment at the end of the welding step. The two sections 10 forming the coating are welded to each other along the zone represented by the double dashed line indicated at 40. At this point, the finished coating is removed from the positioning devices after they have been opened by a rotation of the upper walls 16 about the respective articulation axes 18. The preceding example refers to the case in which the coating layer is formed by only two sections. The same principle can also be applied with a different number of sections to be joined to each other.

## Claims

1. A method for preparing a coating layer formed by at least two sections (10) made of different materials or with different aesthetical characteristics, joined to each other along a predetermined line (40),
characterised in that it comprises the steps of:
- placing at least one first and second sheet (10) of coating materials into respective positioning devices (12) each of which includes two walls (14, 16) articulated to each other,
- placing in a predetermined position each of said positioning devices (12) on a cutting apparatus (26) and cutting each sheet (10) along a predetermined line,
- placing in predetermined positions at least two positioning devices (12) containing respective cut sheet (10) on a welding equipment (32), so that respective reciprocal joining lines of the sheet (10) overlay each other in correspondence with a welding element (36, 38), and
- welding the sheets (10) along said joining line (40) and removing the finished coating layer after having opened said positioning devices.

2. A method according to claim 1, characterised in that each of said positioning devices (12) is provided with reference elements (20) intended to engage corresponding reference elements (22, 34) provided on said cutting apparatus (26) and said welding equipment (22).
